# EUROPEAN PATENT APPLICATION

(11) **EP 3 639 970 A1**
(43) Date of publication of application: **22.04.2020**
(21) Application number: 19197477.3
(22) Date of filing: 16.09.2019
(51) Int. Cl.: B23P 15/04, B21D 26/055, B21D 53/04, B21D 53/78, B23K 20/02, B23K 20/18, F01D 5/14, F04D 29/38, F01D 5/18, F04D 29/32

(54) **FAN OUTLET GUIDE VANE MANUFACTURE**

(30) Priority: 15.10.2018 GB 201816725
(71) Applicant: Rolls-Royce plc, London N1 9FX (GB)
(72) Inventor: Else, Stewart, Derby, Derbyshire DE24 8BJ (GB); Woods, Mark, Derby, Derbyshire DE24 8BJ (GB); Spilsbury, Shaun, Derby, Derbyshire DE24 8BJ (GB)
(74) Representative: Rolls-Royce plc

(57) **Abstract**

A method of forming an article for finish fabrication into a fan outlet guide vane of a turbofan engine is provided. The method includes steps of: providing first and second sides of a metallic workpiece, each side having a relatively thin central region and a relatively thick peripheral region, and each side being formed from a plurality of separate pieces which are assembled in position relative to each other to provide the respective side, the pieces of each side including a plate (61) which at least partially forms the central region, and one or more thicker blocks (62) which at least partially form the peripheral region; stacking the first and second sides so that a contact interface is formed between the sides; diffusion bonding the first and second sides together across the interface over regions of the interface other than a preselected region thereof corresponding with the thin central regions of the first and second sides; and hot creep forming the bonded first and second sides and inflating the workpiece at the preselected region to produce the article such that the first and second sides form opposite aerofoil surfaces of the fan outlet guide vane.

## Description

The present disclosure relates to a method of forming an article for finish fabrication into a fan outlet guide vane (OGV) of a turbofan engine.

Gas turbine engines have an engine core comprising one or more turbine stages, a combustor, one or more compressor turbine stages, and one or more core shafts connecting the turbine stage(s) to the compressor stage(s). A turbofan is a gas turbine engine which also has a propulsive fan, comprising a circumferential row of fan blades, located upstream of the engine core. The fan may be driven directly by a core shaft or indirectly via a gearbox that receives an input from a core shaft.

The propulsive fan generates two airflows: a core airflow which enters the engine core, and a bypass airflow which flows through a bypass duct surrounding the engine core. Typically the fan is surrounded by a fan case which, among other functions, provides rotor containment and helps to determine fan blade tip clearances. Downstream of the fan, the engine may have a circumferential row of static fan outlet guide vanes. These have an aerofoil shaped section and are used to straighten the bypass airflow entering the bypass duct. However, they also form a major physical connection and load path between the fan case and the engine core.

Individual OGVs can be manufactured by a process in which two machined metallic plates are joined together by diffusion bonding, followed by hot creep forming and inflation to form the hollow aerofoil shaped section, as described for example in US 2002/174540 (which is incorporated herein by reference). Subsequent machining and fabrication operations finish the OGV.

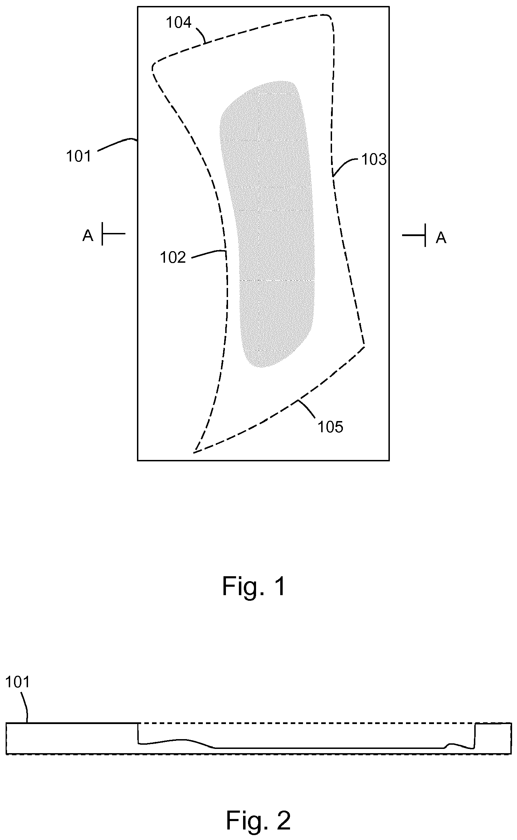

Figure 1 shows schematically a plan view of one of the metallic plates 101. These are typically manufactured from titanium 6-4 alloy and, for forming an OGV of a large civil turbofan, may be approximately 8 mm thick for current engines, but can significantly thicker (e.g. 35-40mm) for future engines. The approximate position and aerofoil outline surface profile of the OGV which will eventually be formed from the plate is indicated with a dashed line. The OGV has a leading edge 102, a trailing edge 103, an outer end wall edge 104 and an inner end wall edge 105.

Figure 2 is a schematic cross-section through the plate 101 on line A-A. The plate has a profiled cavity machined into one surface, as illustrated by the solid line in Figure 2. The dashed line in Figure 2 represents the original thickness of the plate. The cavity produces a relatively thin central region of the plate, the approximate extent of which is indicated with grey shading on Figure 1. For example, the central region may have a thickness of about 1 mm. In contrast, parts of the peripheral region of the plate surrounding this central region may maintain the original thickness of about 8 mm.

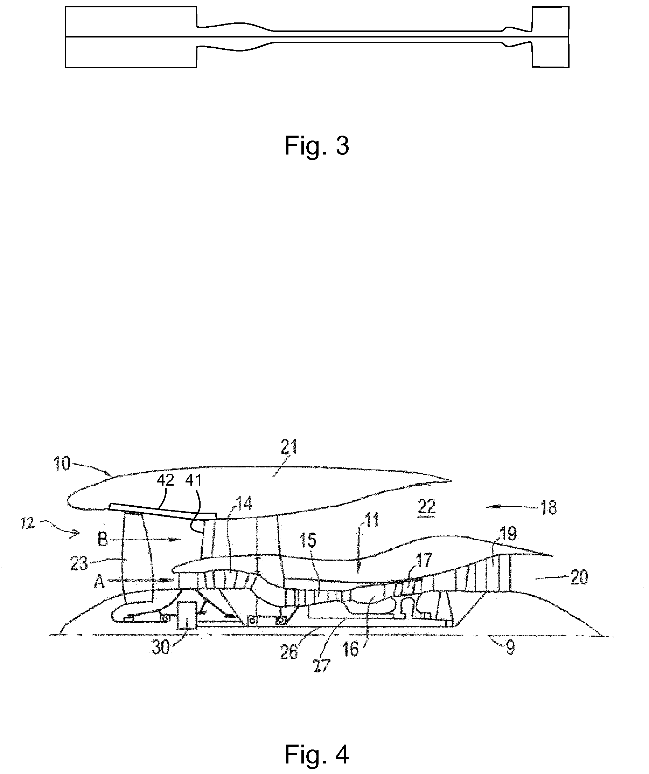

The other plate is similarly machined, and the two plates are then assembled together, back to back, within suitable tooling. The assembly is then diffusion bonded together around their peripheral regions to form a joined workpiece, as shown schematically in the cross-section of Figure 3. The bonded assembly is ready for hot creep forming and inflation across the unbonded, thinner central regions. To aid this process, an inert gas can be pumped under pressure in between the two plates.

The process requires a substantial amount of metal to be machined from the original plates to achieve the required geometry of the intermediate article after hot creep forming and inflation, i.e. even before finish fabrication. This is because each plate has to be at least half the thickness of the thickest solid section of the final OGV. In some cases, approximately 45% of the metal is machined away from the plates before hot creep forming and inflation. The machining time and lost metal costs incurred are significant.

According to a first aspect of the disclosure there is provided a method of forming an article for finish fabrication into a fan outlet guide vane of a turbofan engine, the method including steps of:
providing first and second sides of a metallic workpiece, each side having a central region and a peripheral region, a thickness of the central region being smaller than a thickness of the peripheral region, and each side being formed from a plurality of separate pieces which are assembled in position relative to each other to provide the respective side, the pieces of each side including a plate which at least partially forms the central region, and one or more thicker blocks which at least partially form the peripheral region;
stacking the first and second sides so that a contact interface is formed between the sides;
diffusion bonding the first and second sides together across the interface over regions of the interface other than a preselected region thereof corresponding with the thin central regions of the first and second sides; and
hot creep forming the bonded first and second sides and inflating the workpiece at the preselected region to produce the article such that the first and second sides form opposite aerofoil surfaces of the fan outlet guide vane.

Advantageously, by forming each side of the workpiece from the plurality of separate pieces, and in particular the relatively thin plate for the central region and the thicker block(s) for the peripheral region, it is possible to reduce manufacturing cost by reducing the amount of input metal. It is also possible to reduce the amount of machining needed to form the workpiece before hot creep forming and inflation.

According to a second aspect of the disclosure there is provided a process for manufacturing a fan outlet guide vane of a turbofan engine, the process including:
performing the method of the first aspect; and
finish fabrication of the article into the fan outlet guide vane.

According to a third aspect of the disclosure there is provided a fan outlet guide vane manufactured by the process of the second aspect, and according to a fourth aspect of the disclosure there is provided a turbofan engine having a circumferential row of fan outlet guide vanes according to the third aspect.

Optional features of the present disclosure will now be set out. These are applicable singly or in any combination with any aspect of the present disclosure.

The method may further include a step before the stacking step of diffusion bonding the assembled pieces of each side in their assembled relative positions.

Alternatively, the step of diffusion bonding the first and second sides together may also include diffusion bonding the assembled pieces of each side in their assembled relative positions. In this way, the overall number of separate diffusion bonding steps can be reduced.

The method may further include a step before the hot creep forming and inflating step of machining each side to refine the shape of its central region. Typically, this machining is performed after the assembled pieces of each side are diffusion bonded in their assembled relative positions.

The pieces of each side may include at least four thick blocks which at least partially form the peripheral region. For example, a block may extend along a part of the peripheral region which forms the leading edge of the respective aerofoil surface, a block may extend along a part of the peripheral region which forms the trailing edge, a block may extend along a part of the peripheral region which forms the radially inner end wall edge, and a block may extend along a part of the peripheral region which forms the radially outer end wall edge.

Conveniently, the thin plate of each side may form the entire central region.

According to one option, the thin plate of each side may extend across to partially form the peripheral region, the one or more thick blocks of that side being stacked on the thin plate in their assembled relative positions to complete the peripheral region.

However, according to another option, the thin plate of each side may have a perimeter edge with the thick blocks of that side abutting the perimeter edge in their assembled relative positions.

Each side may have a boundary between its thin central region and its thick peripheral region, the boundary substantially coinciding with leading, trailing, and outer and inner end wall edges of the respective aerofoil surface of the fan outlet guide vane. In this way, the amount of machining needed to refine the shape of the central region of each side can be reduced.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ.

The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 shows schematically a plan view of a metallic plate for use in forming an OGV of a large civil turbofan;
Figure 2 shows a schematic cross-section through the plate of Figure 1 on line A-A;
Figure 3 shows schematically two such plates assembled together and diffusion bonded to form a joined workpiece ready for hot creep forming and inflation;
Figure 4 is a sectional side view of a gas turbine engine;
Figure 5 is a close up sectional side view of an upstream portion of a gas turbine engine;
Figure 6 is a partially cut-away view of a gearbox for a gas turbine engine;
Figure 7 shows a plan view of one side of a workpiece for use in a method of forming a precursor article of an OGV of the engine of Figure 4;
Figure 8 shows a schematic cross-section through the side of Figure 7 on line A-A;
Figure 9 shows a schematic cross-section through the side of Figure 7 on line B-B;
Figure 10 shows a schematic cross-section through two diffusion bonded sides of the workpiece in a first variant of the method;
Figure 11 shows a plan view of one side of the workpiece for use in a second variant of the method;
Figure 12 shows a schematic cross-section through a side of the workpiece for use in a third variant of the method; and
Figure 13 shows a schematic cross-section through two diffusion bonded sides of the workpiece in an approach combining the first and third variants of the method.

Figure 4 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

Behind the fan 23, a row of OGVs 41 straighten the bypass airflow B and form a load path between a fan case 42 and the engine core 11. The OGVs also protect downstream components.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

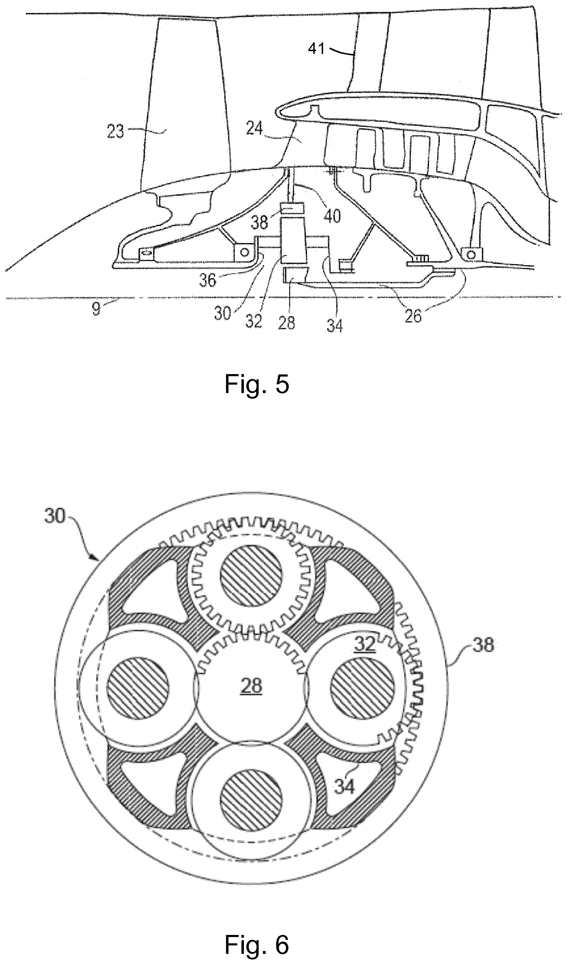

An exemplary arrangement for a geared fan gas turbine engine 10 is shown in Figure 5. The low pressure turbine 19 (see Figure 4) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 6. Each of the sun gear 28, planet gears 32 and ring gear 38 comprise teeth about their periphery to intermesh with the other gears. However, for clarity only exemplary portions of the teeth are illustrated in Figure 6. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 5 and 6 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 5 and 6 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 5 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 5. For example, where the gearbox 30 has a star arrangement (described above), the skilled person would readily understand that the arrangement of output and support linkages and bearing locations would typically be different to that shown by way of example in Figure 5.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 4 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 4), and a circumferential direction (perpendicular to the page in the Figure 4 view). The axial, radial and circumferential directions are mutually perpendicular.

The OGVs 41 are formed by hot creep and inflation of a precursor article, followed by final fabrication operations, such as finish machining. This precursor article in turn is formed from a metallic (e.g. titanium 6-4 alloy) workpiece.

The hot creep forming and inflation, and subsequent final fabrication operations can be performed conventionally, e.g. as described in US 2002/174540. The workpiece, by contrast, is unconventional and differs in important respects from that described above in relation to Figures 1 to 3.

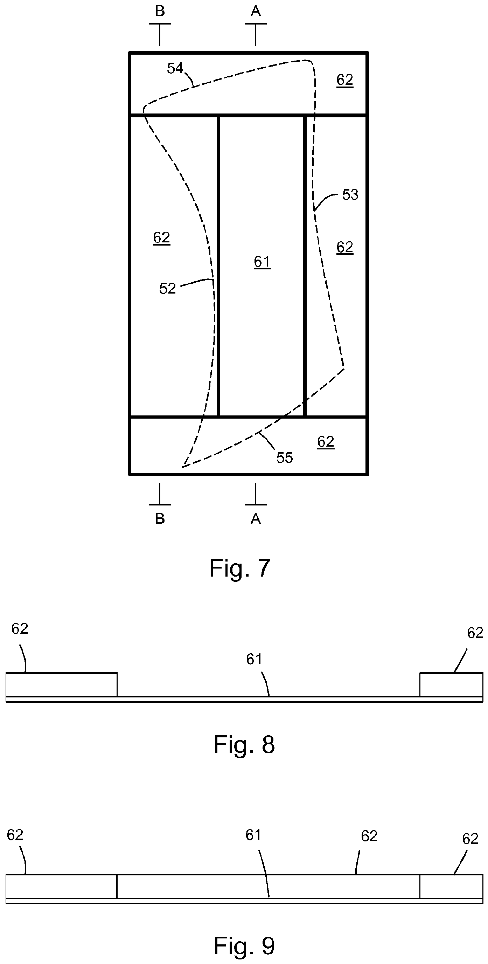

More particularly, the workpiece has first and second sides, which are both rectangular in outline, each side ultimately forming opposite aerofoil surfaces of the OGV. Figure 7 shows a plan view of one of the sides, Figure 8 shows a schematic cross-section through the side on line A-A, and Figure 9 shows a schematic cross-section through the side on line B-B. The approximate position of the outline of the respective aerofoil surface of the OGV is indicated with a dashed line on Figure 7. The OGV has a leading edge 52, a trailing edge 53, an outer end wall edge 54 and an inner end wall edge 55.

Each side is formed from separate pieces of metal which are assembled in position relative to each. In the example of Figures 7 to 9, these include a thin rectangular plate 61 which covers the whole area of the side, and four thicker blocks 62 which are assembled on top of and around the edges of the plate. In this way, the plate forms a thin central region of the side, while the combination of the plate and the blocks forms a thicker peripheral region of the side. In Figure 7 the edges of the blocks are indicated with thicker lines.

The assembled pieces 61, 62 of each side can then be diffusion bonded together and thereafter machined to refine the shape of the central region so that a profiled cavity like that shown in Figure 2 is produced. Subsequently, the two sides are stacked together to form a contact interface (as per Figure 3), diffusion bonded across the interface over regions of the interface other than a preselected region thereof corresponding with the thin central regions of the first and second sides, and subjected to hot creep forming and inflating at the preselected region to produce the precursor article, before undergoing final fabrication operations.

The thickness and dimensions of each piece 61, 62 can be selected to provide just enough material to allow machining to the desired profile. This method of forming the workpiece significantly reduces the amount of input material that needs to be machined to achieve a desired geometry before the hot creep forming and inflation.

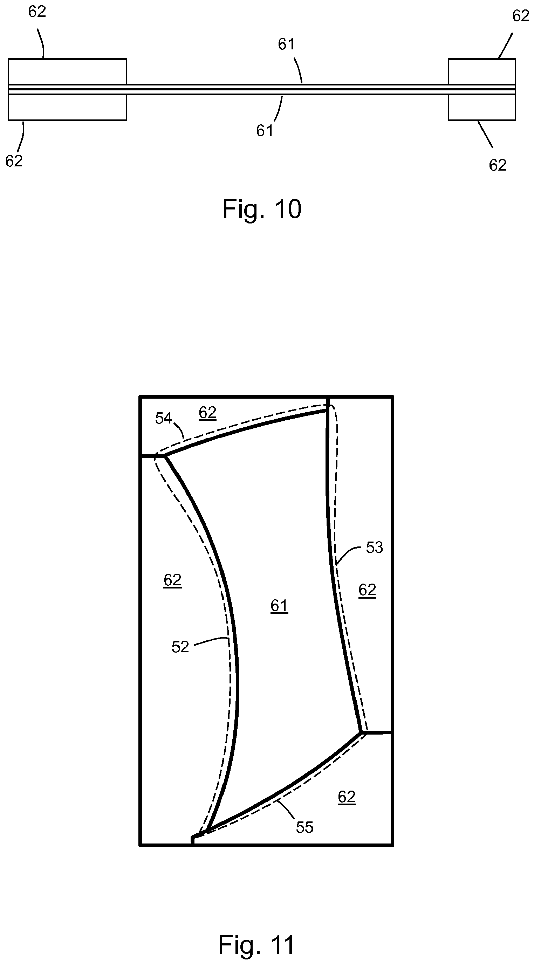

In a first variant of the method, and as an alternative to diffusion bonding the assembled pieces 61, 62 of each side before machining to refine the shape of the central region, this diffusion bonding step can be combined with diffusion bonding across the interface of the stacked sides, to produce a workpiece as shown schematically in Figure 10. Machining to refine the shapes of the central regions of both sides can then be performed on this workpiece. Overall, this approach reduces the number of separate diffusion bonding steps, but can complicate the assembling of the pieces and the machining to form the profiled cavities.

In a second variant of the method, the thick blocks 62 can be shaped to better conform with the desired profile of the cavity of each side of the workpiece. For example, as shown in Figure 11, the blocks can be shaped so that the boundary between the thin central region and the thick peripheral region of each side substantially coincides with the leading 52, trailing 53, outer end wall 54 and inner end wall 55 edges of the respective aerofoil surface of the OGV. This then helps to further reduce the amount of machining needed to achieve a desired geometry before the hot creep forming and inflation.

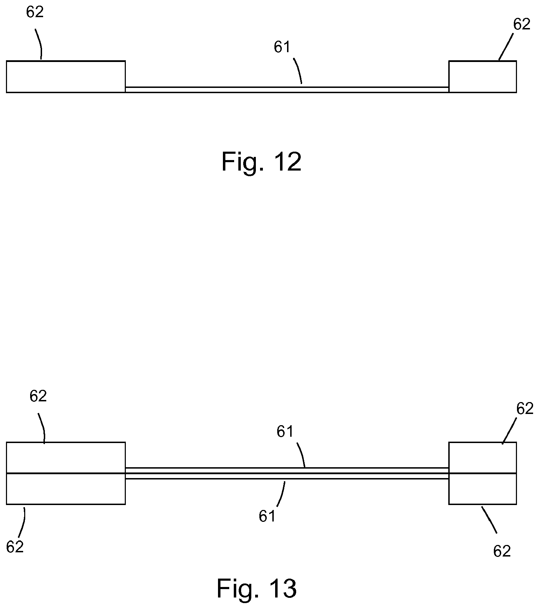

In a third variant of the method, illustrated in Figure 12, the thick blocks 62 of each side can be assembled so that they abut the edges of the thin plate 61, rather than being located on top of the plate. The diffusion bonds between the plate and blocks of each side are then formed across these abutting edges. Figure 13 shows schematically the workpiece formed by combining the approaches of the first and third variants of the method before machining to refine the shapes of the central regions of both its sides.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of forming an article for finish fabrication into a fan outlet guide vane of a turbofan engine, the method including steps of:
providing first and second sides of a metallic workpiece, each side having a central region and a peripheral region, a thickness of the central region being smaller than a thickness of the peripheral region, and each side being formed from a plurality of separate pieces which are assembled in position relative to each other to provide the respective side, the pieces of each side including a plate (61) which at least partially forms the central region, and one or more thicker blocks (62) which at least partially form the peripheral region;
stacking the first and second sides so that a contact interface is formed between the sides;
diffusion bonding the first and second sides together across the interface over regions of the interface other than a preselected region thereof corresponding with the thin central regions of the first and second sides; and
hot creep forming the bonded first and second sides and inflating the workpiece at the preselected region to produce the article such that the first and second sides form opposite aerofoil surfaces of the fan outlet guide vane.

2. The method of Claim 1, further including a step before the stacking step of diffusion bonding the assembled pieces of each side in their assembled relative positions.

3. The method of Claim 1, wherein the step of diffusion bonding the first and second sides together also includes diffusion bonding the assembled pieces of each side in their assembled relative positions.

4. The method of any one of the previous claims, further including a step before the hot creep forming and inflating step of machining each side to refine the shape of its central region.

5. The method of any one of the previous claims, wherein the pieces of each side include at least four thick blocks which at least partially form the peripheral region.

6. The method of any one of the previous claims, wherein the thin plate of each side forms the entire central region.

7. The method of any one of the previous claims, wherein the thin plate of each side extends across to partially form the peripheral region, the one or more thick blocks of that side being stacked on the thin plate in their assembled relative positions to complete the peripheral region.

8. The method of any one of Claims 1 to 6, wherein the thin plate of each side has a perimeter edge, the thick blocks of that side abutting the perimeter edge in their assembled relative positions.

9. The method of any one of the previous claims, wherein each side has a boundary between its thin central region and its thick peripheral region, the boundary substantially coinciding with leading (51), trailing (52), outer end wall (53) and inner end wall (54) edges of the respective aerofoil surface of the fan outlet guide vane.

10. A process for manufacturing a fan outlet guide vane of a turbofan engine, the process including:
performing the method of any one of the previous claims; and
finish fabrication of the article into the fan outlet guide vane.

11. A fan outlet guide vane manufactured by the process as claimed in Claim 10.

12. A turbofan engine having a circumferential row of fan outlet guide vanes as claimed in Claim 11.
